# EUROPÄISCHE PATENTSCHRIFT

(11) **EP 2 691 667 B1**
(45) Veröffentlichungstag und Bekanntmachung des Hinweises auf die Patenterteilung: **13.05.2015**
(21) Anmeldenummer: 12712566.4
(22) Anmeldetag: 06.03.2012
(51) Int. Cl.: F16D 13/75

(54) **RAMPENRING UND HALTER FÜR EINE NACHSTELLEINRICHTUNG EINER REIBUNGSKUPPLUNG**
RAMP RING AND HOLDER FOR AN ADJUSTING DEVICE OF A FRICTION CLUTCH
BAGUE DE RAMPE ET SUPPORT POUR UN SYSTÈME DE POST-RÉGLAGE D'UN ACCOUPLEMENT À FRICTION

(30) Priorität: 31.03.2011 DE 102011015643
(43) Veröffentlichungstag der Anmeldung: 05.02.2014
(73) Patentinhaber: Schaeffler Technologies AG & Co. KG, 91074 Herzogenaurach (DE)
(72) Erfinder: AHNERT, Gerd, 77880 Sasbach (DE); GÜTLE, Martin, 77654 Offenburg (DE); SENGHAS, Marc, 77815 Bühl (DE); HURLE, Tanja, 76437 Rastatt (DE)
(86) Internationale Anmeldenummer: PCT/DE2012/000218
(87) Internationale Veröffentlichungsnummer: WO 2012/130198

(56) Entgegenhaltungen:
- DE-A1- 10 312 078
- DE-A1-102009 035 225
- FR-A1- 2 812 047

## Beschreibung

Die Erfindung betrifft einen Rampenring und einen Halter für eine Nachstelleinrichtung einer Reibungskupplung eines Kraftfahrzeugs, mit deren Hilfe ein verschleißbedingter Fehlabstand einer Anpressplatte zu einer Gegenplatte der Reibungskupplung nachgestellt werden kann.

Reibungskupplungen können zum Ausgleich eines auftretenden Verschleißes von Reibbelägen mit,einer kraftgesteuerten Nachstelleinrichtung versehen sein. Hier wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt ("sensieren") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus DE 10 2009 035 225 A1 und WO 2009/056092 A1 ist jeweils eine Reibungskupplung mit einer weggesteuerten Nachstelleinrichtung bekannt, bei der eine sich in Abhängigkeit vom Abstand eines Betätigungssystems mit einer Tellerfeder und einer Anpressplatte axial verlagernde Antriebsklinke eines Sensierblechs auf ein Ritzel einer von einem Halter gelagerten Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegenplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen.

Durch unbeabsichtigte Relativbewegungen der beweglichen Teile der Reibungskupplung kann es in ungünstigen Situationen vorkommen, dass ein unnötiges Nachstellen der Reibungskupplung durch die Nachstelleinrichtung ausgelöst wird.

Es ist die Aufgabe der Erfindung Maßnahmen anzugeben, mit deren Hilfe ein geringes Risiko eines unbeabsichtigten Nachstellens einer Nachstelleinrichtung für eine Reibungskupplung ermöglicht ist.

Erfindungsgemäß ist ein Rampenring für ein Rampensystem einer Nachstelleinrichtung zur Nachstellung eines verschließbedingten Fehlabstands zwischen einer Gegenplatte und einer Anpressplatte einer Reibungskupplung vorgesehen mit einer Gleitrampe zum Abgleiten auf einer Gegenrampe zur Nachstellung des Fehlabstands und einer axial von der Gleitrampe wegweisenden Halterampe zur Anlage an einem direkt oder indirekt mit der Gegenrampe verbundenen Halteanschlag zur Begrenzung eines axialen Abhubs des Rampenrings von der Anpressplatte, wobei eine Rampensteigung der Halterampe einer Rampensteigung der Gleitrampe entspricht.

Durch die an dem Halteanschlag anschlagende Halterampe kann auch bei Schwingungsanregungen des Rampenrings ein signifikantes Abheben des Rampenrings von der Gegenrampe beziehungsweise von einer mit der Gegenrampe verbundenen Anpressplatte vermieden werden. Dadurch wird gleichzeitig eine durch den angeregten Rampenring verursachte Relativbewegung innerhalb der Nachstelleinrichtung vermieden, so dass ein unbeabsichtigtes Nachstellen der Nachstelleinrichtung durch den sich bewegenden Rampenring vermieden werden kann. Insbesondere wird dadurch eine Relativbewegung einer an dem Rampenring abgestützten Antriebsklinke, die ein Ritzel zum Verdrehen des Rampenrings antreibt, vermieden. Dadurch ist ein geringes Risiko für ein unbeabsichtigtes Nachstellen einer Nachstelleinrichtung für eine Reibungskupplung ermöglicht. Dadurch, dass die Rampensteigung der Halterampe der Rampensteigung der Gleitrampe entspricht, wird sichergestellt, dass sich der Rampenring nicht an dem Halteanschlag verkeilen kann oder der Abstand zwischen der Halterampe und dem Halteanschlag größer wird. Stattdessen wird sichergestellt, dass der Abstand zwischen der Halterampe und dem Halteanschlag über den Verschleißbereich der Reibungskupplung im Wesentlichen konstant bleibt. Die Abwicklungen der Gleitrampe und der Halterampe sind im Wesentlichen parallel zueinander. Die Gleitrampe und die Halterampe können in axialer Richtung übereinander angeordnet sein. Es ist aber auch möglich, dass die Gleitrampe und die Halterampe in axialer Richtung seitlich zueinander versetzt oder sogar in unterschiedliche Richtungen, beispielsweise in Umfangsrichtung und tangential, ausgerichtet sein können. Die Rampe und die Gegenrampe können auch Teil einer Verschraubung sein, so dass der Rampenring in einem oder mehreren Gewindegängen der Verschraubung auf der Gegenrampe abgleiten kann. Die Gegenrampe ist insbesondere einstückig von der Anpressplatte ausgebildet. Die übrige konstruktive Ausgestaltung der Nachstelleinrichtung kann wie in DE 10 2009 035 225 A1 oder WO 2009 056092 A1 beschrieben ausgestaltet sein, auf deren Inhalt hiermit als Teil der Erfindung Bezug genommen wird.

Insbesondere ist die Halterampe durch ein insbesondere tangential zur Gleitrampe verlaufendes Zwischenteil ausgebildet, wobei das Zwischenteil als zur Gleitrampe separates Bauteil ausgestaltet ist. Die Gleitrampe kann dadurch durch ein Bauteil mit einer im Wesentlichen ringförmigen Geometrie ausgebildet werden, während das Zwischenteil beispielsweise aus einem Bauteil mit einer im Wesentlichen stabförmiger Geometrie ausgebildet werden kann. Die Herstellung des Rampenrings ist dadurch vereinfacht und kostengünstig. Das Zwischenteil kann lösbar oder unlösbar, beispielsweise durch Schweißen, Verschrauben oder Vernieten, mit einem die Gleitrampe ausbildenden Grundkörper des Rampenrings befestigt sein. Das Zwischenteil kann insbesondere im Wesentlichen parallel zu einer mit einem Ritzel verbundenen Spindel zum Verdrehen des Rampenrings angeordnet sein, so dass die Halterampe im Wesentlichen parallel zur Spindel angeordnet ist. Dadurch kann der Halteanschlag benachbart zu der Spindel angeordnet werden, so dass insbesondere im Bereich einer in das Ritzel eingreifenden Antriebsklinke ein Abheben des Rampenrings vermieden werden kann.

Vorzugsweise ist ein axial von der Gleitrampe wegweisender Betätigungsanschlag zum Anschlagen an ein Betätigungselement, insbesondere Hebelfeder, und/oder ein Axialanschlag zum Anschlagen an ein eine Antriebsklinke aufweisendes Klinkenblech zum Verursachen eines Nachstellens vorgesehen. Über den Betätigungsanschlag kann eine Kraft eingeleitet werden, um über den Rampenring eine Kraft auf die Gegenrampe und von dort auf die Anpressplatte aufzuprägen, damit die Reibungskupplung durch ein Verpressen einer Kupplungsscheibe zwischen der Anpressplatte und der Gegenplatte geschlossen werden kann. Das Betätigungselement kann beispielsweise eine als Tellerfeder ausgestaltete Hebelfeder sein, die um einen insbesondere in Umfangsrichtung verlaufenden im wesentlichen ringförmigen Schwenkpunkt elastisch geschwenkt werden kann, um eine Kraft auf den Betätigungsanschlag zu übertragen. Durch die Anordnung des Axialanschlags für die Antriebsklinke an dem Rampenring ist die Einstellung des Axialwegs zwischen der Antriebsklinke und dem Ritzel unabhängig von der Bewegung des Betätigungselements. Der Axialanschlag am Rampenring stellt dabei einen über die Lebensdauer konstanten Bezugspunkt dar, von dem sich die Anpressplatte mit zunehmender Anzahl von Nachstellvorgängen axial wegbewegt. Die Abhubbewegungen des Betätigungselements sind für den Axialanschlag an dem Rampenring ohne Einfluss. Weiterhin sind der Rampenring und damit auch der an diesem fest angebrachte oder aus diesem gebildete Axialanschlag gegenüber Schwingungen unempfindlich. Um Zerstörungen oder Beschädigungen des Axialanschlags, der Antriebsklinke oder einen Gegenanschlag des Axialanschlags bildende Bauteile, die zu einer Fehlfunktion der Nachstelleinrichtung führen könnten, zu vermeiden, wird der Axialanschlag insbesondere axial elastisch ausgeführt. Hierzu kann die Antriebsklinke nach Erreichen des Axialanschlags gemeinsam mit dem Ritzel axial gegenüber einem Kupplungsdeckel entgegen der Wirkung einer Vorspannfeder verlagert werden. Hierzu kann die Vorspannfeder als einseitig außerhalb des Kupplungsdeckels befestigte und axial gegen den Kupplungsdeckel vorgespannte Blattfeder ausgebildet sein. An der Vorspannfeder sind insbesondere die Antriebsklinke und ein Abstandsblech befestigt, die jeweils den Kupplungsdeckel axial durchgreifen. Der an dem Rampenring angeordnete Axialanschlag kann vorzugsweise direkt aus diesem gebildet sein, beispielsweise aus diesem ausgestellt oder angeformt sein. Alternativ kann der Axialanschlag durch Materialauftrag oder Befestigung eines entsprechenden Materialstücks wie Blechstück beispielsweise durch Nieten, Schrauben oder Schweißen erfolgen.

Die Erfindung betrifft ferner einen Halter für eine Nachstelleinrichtung einer Reibungskupplung, mit einem ersten Haltearm zur Lagerung einer mit einem Ritzel verbundenen Spindel zum axialen Bewegen einer auf die Spindel aufgeschraubten Spindelmutter, wobei erfindungsgemäß der erste Haltearm einen abstehenden Halteanschlag zur Begrenzung eines axialen Abhubs eines Rampenrings der Nachstelleinrichtung von einer Anpressplatte aufweist. Durch die an dem Halteanschlag anschlagende Halterampe kann auch bei Schwingungsanregungen des Rampenrings ein signifikantes Abheben des Rampenrings von der Gegenrampe beziehungsweise von einer mit der Gegenrampe verbundenen Anpressplatte vermieden werden. Dadurch wird gleichzeitig eine durch den angeregten Rampenring verursachte Relativbewegung innerhalb der Nachstelleinrichtung vermieden, so dass ein unbeabsichtigtes Nachstellen der Nachstelleinrichtung durch den sich bewegenden Rampenring vermieden werden kann. Insbesondere wird dadurch eine Relativbewegung einer an dem Rampenring abgestützten Antriebsklinke, die ein Ritzel zum Verdrehen des Rampenrings antreibt, vermieden. Dadurch ist ein geringes Risiko für ein unbeabsichtigtes Nachstellen einer Nachstelleinrichtung für eine Reibungskupplung ermöglicht. Dadurch, dass der Halteanschlag durch den ersten Haltearm ausgebildet ist, ist es nicht erforderlich ein gesondertes Bauteil für den Halteanschlag vorzusehen oder die Geometrie einer Anpressplatte der Reibungskupplung zu verändern. Insbesondere wird der Bauraumbedarf für die Nachstelleinrichtung nicht wesentlich erhöht. Ferner ist es möglich den Halter auszustanzen und den Halteanschlag bereits beim Ausstanzen des Halters vorzusehen. Der Halteanschlag kann dadurch insbesondere einstückig mit dem ersten Haltearm ausgestaltet sein.

Insbesondere ist ein zum ersten Haltearm beabstandeten zweiten Haltearm zur Lagerung der Spindel und ein zwischen dem ersten Haltearm und dem zweiten Haltearm verlaufenden Befestigungsstück zur Befestigung des Halters mit der Anpressplatte vorgesehen ist. Der Halter kann dadurch die Spindel an zwei Stellen sicher lagern. Insbesondere sind der erste Haltearm, der zweite Haltearm, das Befestigungsstück und der Halteanschlag einstückig ausgestaltet. Der Halter kann dadurch insbesondere durch Stanzen und spanloses Umformen hergestellt werden, ohne dass für die Ausbildung des Halteanschlags signifikante Zusatzkosten anfallen.

Die Erfindung betrifft ferner eine Nachstelleinrichtung für eine Reibungskupplung eines Kraftfahrzeugs, mit einem mit einer Spindel verbundenem Ritzel zur Nachstellung eines verschließbedingten Fehlabstands zwischen einer Gegenplatte und einer Anpressplatte zum Verpressen einer Kupplungsscheibe zwischen der Anpressplatte und der Gegenplatte, einem Halter, der insbesondere wie vorstehend beschrieben aus- und weitergebildet sein kann, zur Lagerung der Spindel, einem mit Hilfe einer auf der Spindel aufgeschraubten Spindelmutter relativ zu einer Gegenrampe verdrehbaren Rampenring, der wie vorstehend beschrieben ausund weitergebildet sein kann, zur Nachstellung des verschleißbedingten Fehlabstands, wobei die Halterampe mit einem direkt oder indirekt mit der Gegenrampe verbundenen Halteanschlag zur Begrenzung eines axialen Abhubs des Rampenrings von der Anpressplatte zusammenwirkt, und einer in einen Umfang des Ritzels eingreifenden Antriebsklinke zum Verdrehen des Ritzels. Dadurch ist ein geringes Risiko für ein unbeabsichtigtes Nachstellen einer Nachstelleinrichtung für eine Reibungskupplung ermöglicht.

Insbesondere ist zwischen der Halterampe und dem Halteanschlag ein Spiel vorgesehen, wobei das Spiel geringer als ein Sensierabstand einer in das Ritzel eingreifenden Antriebsklinke ist. Der Sensierabstand ist eine Relativbewegung der Antriebsklinke zum Ritzel in axialer Richtung, die erforderlich ist, damit ausgehend von einer zwischen zwei Zähnen des Ritzels eingerasteten Antriebsklinke eine weiteres Einrasten zwischen zwei Zähnen des Ritzels erfolgen kann. Hierbei ist es insbesondere möglich, dass mehr als eine in axialer Richtung zueinander versetze Antriebsklinken vorgesehen sein können. Dadurch kann beispielsweise bei zwei zueinander in axialer Richtung versetzten Antriebsklinken der Sensierabstand im Wesentlichen halbiert werden. Dadurch, dass das Spiel zwischen der Halterampe und dem Halteanschlag geringer als der Sensierabstand ist, ist auch bei einer durch das Spiel zugelassenen axialen Relativbewegung der Halterampe zum Halteanschlag ein unbeabsichtigtes Nachstellen vermieden. In diesem Fall kann die mindestens eine Antriebsklinke lediglich an einem Zahn des Ritzels in Höhe des Spiels abgleiten, aber nicht in einen weiteren Zahnzwischenraum springen, um das Ritzel zu verdrehen.

Vorzugsweise ist eine Haltefeder zum Heranziehen der Halterampe an den Halteanschlag oder zum Wegdrücken der Halterampe von dem Halteanschlag vorgesehen. Dadurch kann der Rampenring in der geöffneten Position der Reibungskupplung von der Haltefeder in einer definierten Position gehalten werden. Auftretende Schwingen, die an dem Rampenring angreifen können, können von der Haltefeder gedämpft werden. Ein Schwingen des Rampenrings kann dadurch zumindest erschwert werden. Insbesondere können auftretende Relativbewegungen zwischen dem Rampenring und der Gegenrampe reduziert werden.

Die Erfindung betrifft ferner eine Reibungskupplung, insbesondere Doppelkupplung, für ein Kraftfahrzeugs, mit einem Kupplungsdeckel zum zumindest teilweisen Abdecken einer Anpressplatte zum Verpressen einer Kupplungsscheibe zwischen der Anpressplatte und einer Gegenplatte, einer Nachstelleinrichtung, die wie vorstehend beschrieben aus- und weitergebildet sein kann, zum relativen Verdrehen eines Rampenrings in Umfangsrichtung zu einer an dem Rampenring abgleitenden Gegenrampe zur Nachstellung eines verschließbedingten Fehlabstands zwischen der Anpressplatte und der Gegenplatte, wobei die Nachstelleinrichtung ein an dem Kupplungsdeckel abgestütztes Klinkenblech mit einer in einen Umfang des Ritzel eingreifenden Antriebsklinke zum Verdrehen des Ritzels aufweist. Durch die Nachstelleinrichtung ist ein geringes Risiko für ein unbeabsichtigtes Nachstellen einer Nachstelleinrichtung für eine Reibungskupplung ermöglicht. Die Rampe und die Gegenrampe können auch Teil einer Verschraubung sein, so dass der Rampenring in einem oder mehreren Gewindegängen der Verschraubung auf der Gegenrampe abgleiten kann.

Insbesondere ist der Halteanschlag mit der Anpressplatte verbunden oder durch die Anpressplatte ausgebildet. Dadurch ist die relative Position des Halteanschlags zur Anpressplatte festgelegt, so dass über die an dem Halteanschlag anschlagbare Halterampe die axiale relative Position des Rampenrings zur Anpressplatte definiert vorgegeben werden kann. Insbesondere wird ein zu starkes Abheben des Rampenrings von der Anpressplatte vermieden. Vorzugsweise ist die Gegenrampe einstückig durch die Anpressplatte ausgebildet, so dass eine Addition mehrerer Herstellungstoleranzen vermieden ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Prinzipdarstellung einer Reibungskupplung,
- Fig. 2:: eine schematische Prinzipdarstellung eines Rampenrings für die in Fig. 1 dargestellte Reibungskupplung,
- Fig. 3:: eine schematische perspektivische Ansicht einer Ausführungsform für die in Fig. 1 dargestellte Reibungskupplung,
- Fig. 4:: eine schematische perspektivische Ansicht einer Nachstelleinrichtung der Reibungskupplung aus Fig. 3 und
- Fig. 5:: eine schematische perspektivische Ansicht eines Halters der Nachstelleinrichtung aus Fig. 4.

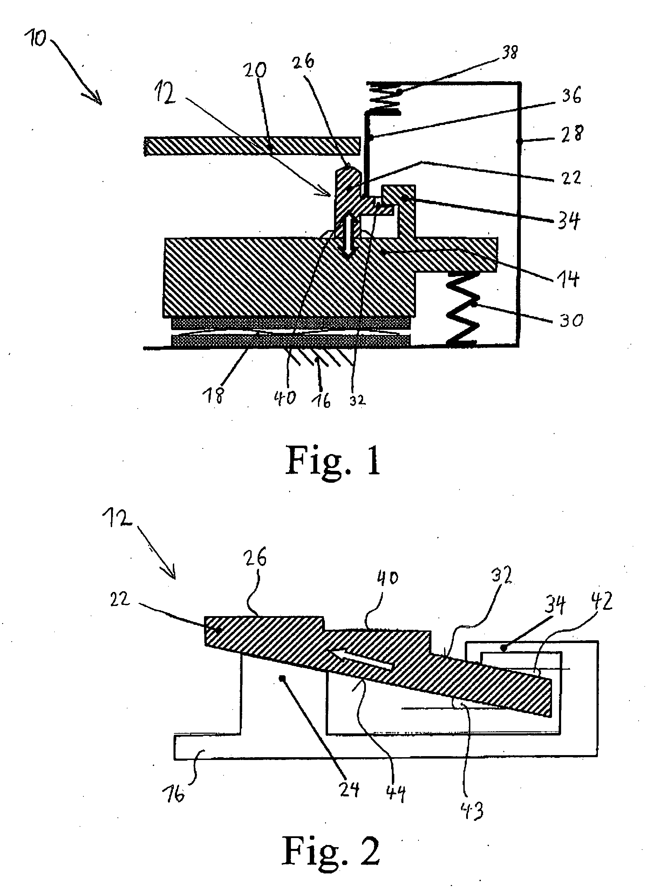

Die in Fig. 1 dargestellte Reibungskupplung 10 weist eine Nachstelleinrichtung 12 auf, die mit einer Anpressplatte 14 verbunden ist. Die Anpressplatte 14 kann gegen eine Gegenplatte 16 gedrückt werden, um zwischen der Anpressplatte 14 und der Gegenplatte 16 eine Kupplungsscheibe 18 zu verpressen. Hierzu kann von einer als Tellerfeder ausgestalteten Hebelfeder 20 eine Betätigungskraft an einen Rampenring 22 aufgeprägt werden, der über eine von der Anpressplatte 14 ausgebildeten Gegenrampe 24 die Betätigungskraft an die Anpressplatte 14 weitergeben kann. Die Hebelfeder 20 kann hierzu an einem von dem Rampenring 22 ausgebildeten Betätigungsanschlag 26 anschlagen. Zum Ausgleich eines verschleißbedingten Fehlabstands der Anpressplatte 14 zur Gegenplatte 16 kann der Rampenring 22 von der Nachstelleinrichtung 12 relativ zur Gegenrampe 24 in Umfangsrichtung verdreht werden, so dass der ursprüngliche Hubweg der Anpressplatte 14 zur Gegenplatte 16 wiederhergestellt werden kann. Wenn die Reibungskupplung 10 geöffnet ist und die Hebelfeder 20 nicht an dem Rampenring 22 anliegt, kann,die Anpressplatte 14 mit Hilfe einer an einem Kupplungsdeckel 28 abgestützten Rückstellfeder 30 von der Gegenplatte 16 und der Kupplungsscheibe 18 weggedrückt werden. Damit in dieser Position der Rampenring 22 im Wesentlichen keine axiale Relativbewegung zur Anpressplatte 14 ausführt, weist der Rampenring 22 eine Halterampe 32 auf, die an einem mit der Anpressplatte 14 und dadurch mit der Gegenrampe 24 verbundenen Halteanschlag 34 anschlagen kann, um die axiale Relativbewegung zu begrenzen. Ferner kann eine Antriebsklinke 36 der Nachstelleinrichtung 12, die mit Hilfe eines Vorspannblechs 38 gegenüber dem Kupplungsdeckel 28 vorgespannt ist, an einem Axialanschlag 40 des Rampenrings abgestützt sein.

Wie in Fig. 2 dargestellt weist die Halterampe 32 im abgewickelten Zustand des Rampenrings 22 die gleiche Rampensteigung 42 wie die Rampensteigung 43 einer an der Gegenrampe 24 abgleitende Gleitrampe 44 des Rampenrings 22 auf. Dadurch ist sichergestellt, dass auch bei einer Drehung des Rampenrings 22 in Umfangsrichtung relativ zum Halteanschlag 34 der Rampenring 22 sich nicht am Halteanschlag 34 verkeilt oder der Abstand zwischen der Halterampe 32 und dem Halteanschlag 34 größer wird.

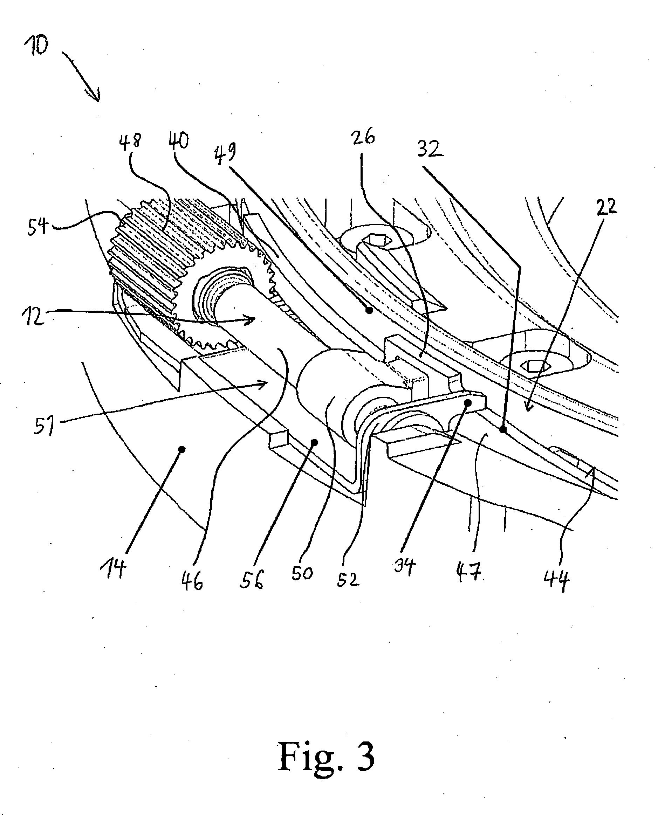

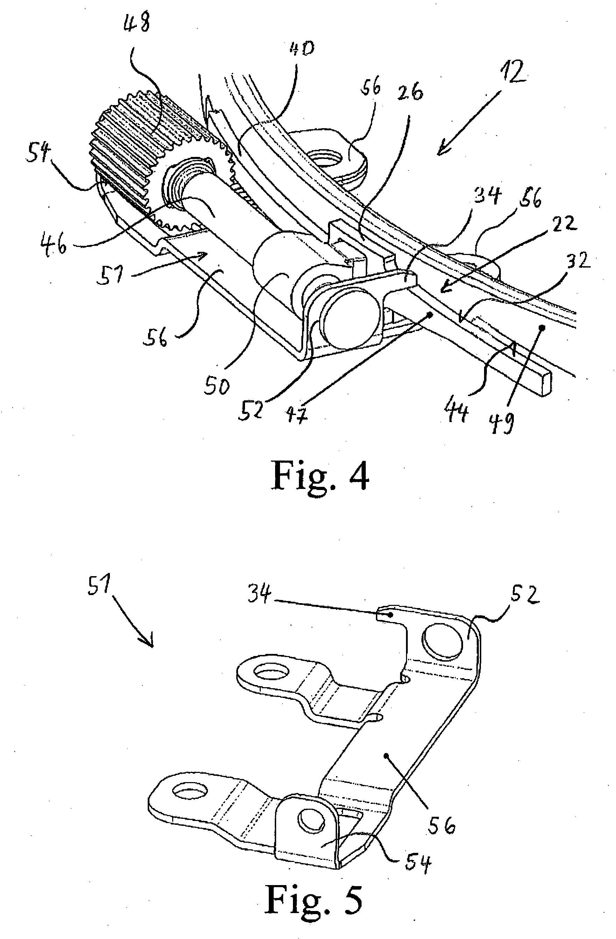

Wie in Fig. 3 und Fig. 4 dargestellt kann die Nachstelleinrichtung 12 ein mit einer Spindel 46 verbundenes Ritzel 48 aufweisen, in das die Antriebsklinke 36 eingreift, um das Ritzel 48 und damit die Spindel 46 bei einem hinreicht großen sensierten Verschleiß zu verdrehen. Dadurch wird eine auf der Spindel 46 aufgeschraubte Spindelmutter 50 in axialer Richtung der Spindel 46 bewegt, wobei die Spindelmutter 50 dabei den Rampenring 22 mitnimmt, um den Verschleiß nachzustellen. Die Halterampe 32 und/oder der Befestigungsanschlag 26 und/oder der Axialanschlag 40 des Rampenrings 22 kann durch ein Zwischenteil 47 ausgebildet werden, das mit einem im Wesentlichen ringförmigen die Gleitrampe 44 ausbildenden Grundkörper 49 des Rampenrings 22 verbunden ist. Die Spindel 46 wird von einem Halter 51 gelagert, der im dargestellten Ausführungsbeispiel einstückig aus einem ersten Haltearm 52, einem zweiten Haltearm 54 und einem den ersten Haltearm 52 mit dem zweiten Haltearm 54 verbindenden Befestigungsstück 56 besteht. Die Haltearme 52, 54 lagern die Spindel 46. Über das Befestigungsstück 56 kann der Halter 51 radial innerhalb zum Rampenring 22 mit der Anpressplatte 14 verschraubt werden. Zusätzlich bildet der erste Haltearm 52 einstückig den Halteanschlag 34 aus. Wie in Fig. 5 dargestellt kann der Halter 51 eine vergleichsweise einfache Geometrie aufweisen, so dass der Halter 51 einschließlich des an dem ersten Haltearm 52 angeformten Halteanschlags 34 ausschließlich durch Stanzen und spanloses Umformen aus einem geeigneten Blech hergestellt werden kann.

### Bezugszeichenliste

- 10: Reibungskupplung
- 12: Nachstelleinrichtung
- 14: Anpressplatte
- 16: Gegenplatte
- 18: Kupplungsscheibe
- 20: Hebelfeder
- 22: Rampenring
- 24: Gegenrampe
- 26: Betätigungsanschlag
- 28: Kupplungsdeckel
- 30: Rückstellfeder
- 32: Halterampe
- 34: Halteanschlag
- 36: Antriebsklinke
- 38: Vorspannblech
- 40: Axialanschlag
- 42: Rampensteigung der Halterampe
- 43: Rampensteigung der Gleitrampe
- 44: Gleitrampe
- 46: Spindel
- 47: Zwischenteil
- 48: Ritzel
- 49: Grundkörper
- 50: Spindelmutter
- 51: Halter
- 52: erster Haltearm
- 54: zweiter Haltearm
- 56: Befestigungsstück

## Patentansprüche

1. Rampenring für ein Rampensystem einer Nachstelleinrichtung (12) zur Nachstellung eines verschließbedingten Fehlabstands zwischen einer Gegenplatte (16) und einer Anpressplatte (14) einer Reibungskupplung (10), mit
einer Gleitrampe (44) zum Abgleiten auf einer Gegenrampe (24) zur Nachstellung des Fehlabstands und
einer axial von der Gleitrampe (44) wegweisenden Halterampe (32) zur Anlage an einem direkt oder indirekt mit der Gegenrampe (24) verbundenen Halteanschlag (34) zur Begrenzung eines axialen Abhubs des Rampenrings (22) von der Anpressplatte (14), wobei eine Rampensteigung (42) der Halterampe (32) einer Rampensteigung (43) der Gleitrampe (44) entspricht.

2. Rampenring nach Anspruch 1 **dadurch gekennzeichnet, dass** die Halterampe (32) durch ein insbesondere tangential zur Gleitrampe (44) verlaufendes Zwischenteil (47) ausgebildet ist, wobei das Zwischenteil (47) als zur Gleitrampe (44) separates Bauteil ausgestaltet ist.

3. Rampenring nach Anspruch 1 oder 2 **dadurch gekennzeichnet, dass** ein axial von der Gleitrampe (44) wegweisender Betätigungsanschlag (26) zum Anschlagen an ein Betätigungselement, insbesondere Hebelfeder (20), und/oder ein Axialanschlag (40) zum Anschlagen an ein eine Antriebsklinke (36) aufweisendes Klinkenblech zum Verursachen eines Nachstellens vorgesehen ist.

4. Halter für eine Nachstelleinrichtung (12) einer Reibungskupplung (10), mit einem ersten Haltearm (52) zur Lagerung einer mit einem Ritzel (48) verbundenen Spindel (46) zum axialen Bewegen einer auf die Spindel (46) aufgeschraubten Spindelmutter (50),
**dadurch gekennzeichnet, dass**
der erste Haltearm (52) einen abstehenden Halteanschlag (34) zur Begrenzung eines axialen Abhubs eines Rampenrings (22) der Nachstelleinrichtung (12) von einer Anpressplatte (14) aufweist.

5. Halter nach Anspruch 4 **dadurch gekennzeichnet, dass** ein zum ersten Haltearm (52) beabstandeten zweiten Haltearm (54) zur Lagerung der Spindel (46) und ein zwischen dem ersten Haltearm (52) und dem zweiten Haltearm (54) verlaufenden Befestigungsstück (56) zur Befestigung des Halters (51) mit der Anpressplatte (14) vorgesehen ist.

6. Nachstelleinrichtung für eine Reibungskupplung (10) eines Kraftfahrzeugs, mit einem mit einer Spindel (46) verbundenem Ritzel (48) zur Nachstellung eines verschließbedingten Fehlabstands zwischen einer Gegenplatte (16) und einer Anpressplatte (14) zum Verpressen einer Kupplungsscheibe (18) zwischen der Anpressplatte (14) und der Gegenplatte (16), einem Halter (51), insbesondere nach Anspruch 4 oder 5, zur Lagerung der Spindel (46), einem mit Hilfe einer auf der Spindel (46) aufgeschraubten Spindelmutter (50) relativ zu einer Gegenrampe (24) verdrehbaren Rampenring (22) nach einem der Ansprüche 1 bis 3 zur Nachstellung des verschleißbedingten Fehlabstands, wobei die Halterampe (32) mit einem direkt oder indirekt mit der Gegenrampe (24) verbundenen Halteanschlag (34) zur Begrenzung eines axialen Abhubs des Rampenrings (22) von der Anpressplatte (14) zusammenwirkt, und einer in einen Umfang des Ritzels (48) eingreifenden Antriebsklinke (36) zum Verdrehen des Ritzels (48).

7. Nachstelleinrichtung nach Anspruch 6 **dadurch gekennzeichnet, dass** zwischen der Halterampe (32) und dem Halteanschlag (34) ein Spiel vorgesehen ist, wobei das Spiel geringer als ein Sensierabstand einer in das Ritzel (48) eingreifenden Antriebsklinke (36) ist.

8. Nachstelleinrichtung nach Anspruch 6 oder 7 **dadurch gekennzeichnet, dass** eine Haltefeder zum Heranziehen der Halterampe (32) an den Halteanschlag (34) oder zum Wegdrücken der Halterampe (32) von dem Halteanschlag (34) vorgesehen ist.

9. Reibungskupplung, insbesondere Doppelkupplung, für ein Kraftfahrzeugs, mit einem Kupplungsdeckel (28) zum zumindest teilweisen Abdecken einer Anpressplatte (14) zum Verpressen einer Kupplungsscheibe (18) zwischen der Anpressplatte (14) und einer Gegenplatte (16), einer Nachstelleinrichtung (12) nach Anspruch 8 zum relativen Verdrehen eines Rampenrings (22) in Umfangsrichtung zu einer an dem Rampenring (22) abgleitenden Gegenrampe (24) zur Nachstellung eines verschließbedingten Fehlabstands zwischen der Anpressplatte (14) und der Gegenplatte (16), wobei die Nachstelleinrichtung (12) ein an dem Kupplungsdeckel (28) abgestütztes Klinkenblech mit der in einen Umfang des Ritzel (48) eingreifenden Antriebsklinke (36) zum Verdrehen des Ritzels (48) aufweist.

10. Reibungskupplung nach Anspruch 9 **dadurch gekennzeichnet, dass** der Halteanschlag (34) mit der Anpressplatte (14) verbunden oder durch die Anpressplatte (14) ausgebildet ist.

## Claims

1. Ramp ring for a ramp system of an adjusting device (12) for adjusting a wear-induced faulty spacing between a counter-plate (16) and a pressing plate (14) of a friction clutch (10), having a sliding ramp (44) for sliding on a counter-ramp (24) in order to adjust the faulty spacing, and a holding ramp (32) which points axially away from the sliding ramp (44) for bearing against a holding stop (34) which is connected directly or indirectly to the counter-ramp (24) in order to limit an axial lift-off of the ramp ring (22) from the pressing plate (14), a ramp gradient (42) of the holding ramp (32) corresponding to a ramp gradient (43) of the sliding ramp (44).

2. Ramp ring according to Claim 1, **characterized in that** the holding ramp (32) is formed by an intermediate part (47) which runs, in particular, tangentially with respect to the sliding ramp (44), the intermediate part (47) being configured as a component which is separate from the sliding ramp (44).

3. Ramp ring according to Claim 1 or 2, **characterized in that** an actuating stop (26) which points axially away from the sliding ramp (44) is provided for bearing against an actuating element, in particular a lever spring (20), and/or an axial stop (40) is provided for bearing against a pawl plate which has a drive pawl (36) in order to bring about an adjustment.

4. Holder for an adjusting device (12) of a friction clutch (10), having a first holding arm (52) for mounting a spindle (46) which is connected to a pinion (48) for the axial movement of a spindle nut (50) which is screwed onto the spindle (46), **characterized in that** the first holding arm (52) has a protruding holding stop (34) for limiting an axial lift-off of a ramp ring (22) of the adjusting device (12) from a pressing plate (14).

5. Holder according to Claim 4, **characterized in that** a second holding arm (54) which is spaced apart from the first holding arm (52) is provided for mounting the spindle (46) and a fastening piece (56) which runs between the first holding arm (52) and the second holding arm (54) is provided for fastening the holder (51) to the pressing plate (14).

6. Adjusting device for a friction clutch (10) of a motor vehicle, having a pinion (48) which is connected to a spindle (46) for adjusting a wear-induced faulty spacing between a counter-plate (16) and a pressing plate (14) for pressing a clutch plate (18) between the pressing plate (14) and the counter-plate (16), a holder (51), in particular according to Claim 4 or 5, for mounting the spindle (46), a ramp ring (22) according to one of Claims 1 to 3 which can be rotated relative to a counter-ramp (24) with the aid of a spindle nut (50) which is screwed onto the spindle (46) in order to adjust the wear-induced faulty spacing, the holding ramp (32) interacting with a holding stop (34) which is connected directly or indirectly to the counter-ramp (24) in order to limit an axial lift-off of the ramp ring (22) from the pressing plate (14), and a drive pawl (36) which engages into a circumference of the pinion (48) in order to rotate the pinion (48).

7. Adjusting device according to Claim 6, **characterized in that** a play is provided between the holding ramp (32) and the holding stop (34), the play being smaller than a sensing spacing of a drive pawl (36) which engages into the pinion (48).

8. Adjusting device according to Claim 6 or 7, **characterized in that** a holding spring is provided for pulling the holding ramp (32) onto the holding stop (34) or for pressing the holding ramp (32) away from the holding stop (34).

9. Friction clutch, in particular double clutch, for a motor vehicle, having a clutch cover (28) for at least partially covering a pressing plate (14) for pressing a clutch plate (18) between the pressing plate (14) and a counter-plate (16), an adjusting device (12) according to Claim 8 for the relative rotation of a ramp ring (22) in the circumferential direction with respect to a counter-ramp (24) which slides on the ramp ring (22) in order to adjust a wear-induced faulty spacing between the pressing plate (14) and the counter-plate (16), the adjusting device (12) having a pawl plate which is supported on the clutch cover (28) and has a drive pawl (36) which engages into a circumference of the pinion (48) in order to rotate the pinion (48).

10. Friction clutch according to Claim 9, **characterized in that** the holding stop (34) is connected to the pressing plate (14) or is configured by the pressing plate (14).

## Revendications

1. Bague de rampe pour un système de rampe d'un dispositif de réglage (12) pour le réglage d'une distance incorrecte due à l'usure entre une plaque conjuguée (16) et une plaque de pression (14) d'un embrayage à friction (10),
comprenant une rampe de glissement (44) pouvant glisser sur une rampe conjuguée (24) pour le réglage de la distance incorrecte et
une rampe de retenue (32) détournée axialement de la rampe de glissement (44) pour l'application contre une butée de retenue (34) connectée directement ou indirectement à la rampe conjuguée (24) pour limiter une course de levage axiale de la bague de rampe (22) à l'écart de la plaque de pression (14),
une pente de rampe (42) de la rampe de retenue (32) correspondant à une pente de rampe (43) de la rampe de glissement (44).

2. Bague de rampe selon la revendication 1, **caractérisée en ce que** la rampe de retenue (32) est réalisée par une partie intermédiaire (47) s'étendant notamment tangentiellement par rapport à la rampe de glissement (44), la partie intermédiaire (47) étant configurée sous forme de composant séparé de la rampe de glissement (44).

3. Bague de rampe selon la revendication 1 ou 2, **caractérisée en ce qu'**une butée d'actionnement (26) détournée axialement de la rampe de glissement (44) est prévue pour buter contre un élément d'actionnement, en particulier un ressort de levier (20), et/ou une butée axiale (40) est prévue pour buter contre une tôle de cliquet présentant un cliquet d'entraînement (36) afin de provoquer un réglage.

4. Élément de retenue pour un dispositif de réglage (12) d'un embrayage à friction (10), comprenant un premier bras de retenue (52) pour supporter une broche (46) connectée à un pignon (48) en vue du mouvement axial d'un écrou de broche (50) vissé sur la broche (46),
**caractérise en ce que**
le premier bras de retenue (52) présente une butée de retenue saillante (34) pour limiter une course de levage axiale d'une bague de rampe (22) du dispositif de réglage (12) depuis une plaque de pression (14).

5. Élément de retenue selon la revendication 4, **caractérisé en ce qu'**un deuxième bras de retenue (54) espacé du premier bras de retenue (52) est prévu pour supporter la broche (46) et une pièce de fixation (56) s'étendant entre le premier bras de retenue (52) et le deuxième bras de retenue (54) pour la fixation de l'élément de retenue (51) sur la plaque de pression (14).

6. Dispositif de réglage pour un embrayage à friction (10) d'un véhicule automobile, comprenant un pignon (48) connecté à une broche (46) pour le réglage d'une distance incorrecte due à l'usure entre une plaque conjuguée (16) et une plaque de pression (14) en vue du pressage d'un disque d'embrayage (18) entre la plaque de pression (14) et la plaque conjuguée (16), un élément de retenue (51), en particulier selon la revendication 4 ou 5, pour supporter la broche (46), une bague de rampe (22) selon l'une quelconque des revendications 1 à 3, pouvant être tournée par rapport à une rampe conjuguée (24) à l'aide d'un écrou de broche (50) vissé sur la broche (46), pour le réglage de la distance incorrecte due à l'usure, la rampe de retenue (32) coopérant avec une butée de retenue (34) connectée directement ou indirectement à la rampe conjuguée (24) pour limiter une course de levage axiale de la bague de rampe (22) depuis la plaque de pression (14), et un cliquet d'entraînement (36) venant en prise dans une périphérie du pignon (48) pour faire tourner le pignon (48).

7. Dispositif de réglage selon la revendication 6, **caractérisé en ce qu'**entre la rampe de retenue (30) et la butée de retenue (34) est prévu un jeu, le jeu étant inférieur à une distance de détection d'un cliquet d'entraînement (36) venant en prise dans le pignon (48).

8. Dispositif de réglage selon la revendication 6 ou 7, **caractérisé en ce qu'**un ressort de retenue est prévu pour attirer la rampe de retenue (32) contre la butée de retenue (34) ou pour repousser la rampe de retenue (32) de la butée de retenue (34).

9. Embrayage à friction, en particulier double embrayage, pour un véhicule automobile, comprenant un couvercle d'embrayage (28) pour recouvrir au moins en partie une plaque de pression (14) pour presser un disque d'embrayage (18) entre la plaque de pression (14) et une plaque conjuguée (16), un dispositif de réglage (12) selon la revendication 8, pour la rotation relative d'une bague de rampe (22) dans la direction périphérique par rapport à une rampe conjuguée (24) et glissant sur la bague de rampe (22) pour régler une distance incorrecte due à l'usure entre la plaque de pression (14) et la plaque conjuguée (16), le dispositif de réglage (12) présentant une tôle de cliquet supportée sur le couvercle d'embrayage (28) avec le cliquet d'entraînement (36) venant en prise dans une périphérie du pignon (48) pour faire tourner le pignon (48).

10. Embrayage à friction selon la revendication 9, **caractérisé en ce que** la butée de retenue (34) est connectée à la plaque de pression (14) ou est réalisée par la plaque de pression (14).
